# EUROPÄISCHE PATENTSCHRIFT

(11) **EP 2 841 262 B1**
(45) Veröffentlichungstag und Bekanntmachung des Hinweises auf die Patenterteilung: **14.06.2017**
(21) Anmeldenummer: 13716940.5
(22) Anmeldetag: 09.04.2013
(51) Int. Cl.: B32B 5/26, B65D 65/40

(54) **GEWEBE FÜR DIE HERSTELLUNG VON SÄCKEN**
FABRIC FOR MAKING BAGS
TISSU SERVANT À LA FABRICATION DE SACS

(30) Priorität: 23.04.2012 AT 4922012
(43) Veröffentlichungstag der Anmeldung: 04.03.2015
(73) Patentinhaber: BSW Machinery Handels-GmbH, 1010 Wien (AT)
(72) Erfinder: SCHMALHOLZ, Peter, 2481 Achau (AT)
(74) Vertreter: Keschmann, Marc
(86) Internationale Anmeldenummer: PCT/AT2013/000060
(87) Internationale Veröffentlichungsnummer: WO 2013/159128

(56) Entgegenhaltungen:
- EP-A1- 0 758 992
- WO-A1-2005/030594
- WO-A1-2008/067661
- WO-A1-2008/095212
- WO-A1-2009/033197
- WO-A1-2010/133597
- WO-A2-2008/139331
- AT-U2- 10 628
- DE-A1-102009 036 556

## Beschreibung

Die Erfindung betrifft ein Gewebe für die Herstellung von Säcken bestehend aus Polymer-, insbesondere Polyolefin-, Polypropylen-, Polyethylen- (HDPE) oder Polyethylenterephthalatbändchen, die vorzugsweise monoaxial verstreckten sind, wobei das Gewebe mit einer Beschichtung versehen ist.

Die Erfindung betrifft weiters einen Sack aus einem solchen Gewebe.

Der schlauchförmige Körper eines Ventilsackes wird üblicherweise aus einem schlauchartigen Rundmaterial oder einem an den Längsrändern zu einem Schlauch verbundenen Flachmaterial gebildet. Eine grobe Einteilung solcher Säcke wird durch die Unterscheidung in Kissen- und Kastenform getroffen. Eine Kissenform von Säcken entsteht üblicherweise durch Konfektionierung der Böden mit einer Textilnaht oder einer Schweißnaht. Bei der Kastenform weist wenigstens ein Ende eine Bodenfaltung auf, sodass der Sack einen im Wesentlichen rechteckigen Boden besitzt. Die vorliegende Erfindung bezieht sich gleichermaßen auf die Kissenform und die Kastenform.

Das Gewebe besteht dabei aus monoaxial verstreckten Polymer-, insbesondere Polyolefin- oder Polypropylenbändchen. Diese Bändchen werden durch Streckung von Polymer-, insbesondere Polyolefin- oder Polypropylenfolien üblicherweise auf das vier- bis zehnfache hergestellt, wodurch die Molekülketten in Bändchenlängsrichtung ausgerichtet werden und in diese Richtungen ca. die sechs- bis zehnfache Festigkeit gegenüber der ursprünglichen Folie aufweisen. Die Bändchenbreite beträgt üblicherweise ca. 1,5 bis 10 mm, die Dicke 20 bis 80 µm. Zur Erzielung von Staub- und Feuchtigkeitsdichtheit weist das Gewebe ein- oder zweiseitig meist eine Beschichtung aus Schmelze aus vorzugsweise demselben Material auf, aus dem die Bändchen bestehen.

Ventilsäcke zeichnen sich dadurch aus, dass in den Boden des Sackes ein aus dem Gewebematerial gebildetes Ventil integriert ist, über welches der beidseitig verschlossene Sack mit Füllgut befüllt werden kann. Die Befüllung erfolgt dadurch, dass ein rohrstutzenförmiges Mundstück einer Abfüllanlage in das Ventil eingeführt wird. Das Ventil wird dabei aufgespreizt, so dass das Füllgut in den Ventilsack gegeben werden kann. Ist die vorgegebene Füllmenge in den Sack gefüllt, wird dieser vom rohrstutzenförmigen Mundstück der Abfüllanlage abgezogen. Dabei soll sich das Ventil schließen, indem sich die Schlauchwandbereiche des Ventilschlauches aneinanderlegen, was dadurch verwirklicht wird, dass der Ventilschlauch durch den vom Füllgut ausgeübten Druck zusammengedrückt wird.

Während des Füllvorganges ist eine Entlüftung des Sackinnenraumes erforderlich. Bei Papiersäcken erfolgt diese Entlüftung über die gesamte Oberfläche des Sackes, da Papier in der Regel eine gewisse Luftdurchlässigkeit aufweist. Gleichzeitig ist Papier auch ohne Beschichtung staubdicht. Der große Nachteil von Papiersäcken ist jedoch deren begrenzte Stabilität, insbesondere Reißfestigkeit.

Säcke aus einem beschichteten Gewebe aus monoaxial verstreckten Polymer-, insbesondere Polyolefin- oder Polypropylenbändchen, hingegen sind überaus reißfest und stabil. Jedoch ist es bei solchen Säcken mit einer feuchtigkeits- oder staubdichten Beschichtung erforderlich, das Gewebe zu perforieren, um die erforderliche Entlüftung sicherzustellen. Dabei wird zwar versucht, die Anzahl und den Durchmesser der Perforierungen so zu bemessen, dass die erforderliche Entlüftungsleistung erreicht und die Staubrückhaltefähigkeit gleichzeitig nicht übermäßig verschlechtert wird; das Ergebnis stellt jedoch immer einen Kompromiss zwischen den beiden gegensätzlichen Anforderungen der Entlüftungsleistung und der Staubrückhaltefähigkeit dar.

Die vorliegende Erfindung zielt daher darauf ab, ein Gewebe der eingangs genannten Art derart weiterzubilden, dass die Staubrückhaltefähigkeit bei gleichzeitiger Beibehaltung einer ausreichenden Entlüftungsleistung verbessert wird.

Ein weiteres Problem bei Geweben der eingangs genannten Art ist deren Verschweißbarkeit. So ist es beispielsweise üblich geworden, die Bodenfaltung eines kastenförmigen Sackes durch Aufschweißen eines Deckblattes aus Gewebe aus monoaxial verstreckten Polymer-, insbesondere Polyolefin-, vorzugsweise Polypropylenbändchen zu verschließen. Dies erfolgt bei manchen Ausführungsformen unter Verwendung einer Zwischenschicht aus thermoplastischem Kunststoff-, insbesondere Polyolefin-, vorzugsweise Polypropylenmaterial (siehe z.B. WO 95/30598 A1). Nachteilig beim Verschweißen ist jedoch, dass die beim Verschweißen unvermeidliche Wärmeeinbringung zu einer Desorientierung der durch die monoaxiale Verstreckung orientierten Moleküle der Kunststoffbändchen führt. Bereiche des Gewebes mit desorientierten Molekülen haben im Vergleich zu Bereichen mit orientierten Molekülen eine wesentlich geringere Festigkeit, sodass im Bereich der Verschweißung die Gefahr eines Aufreißens des Gewebes besteht. Eine Desorientierung lässt sich allenfalls durch eine ausreichend dicke Beschichtung des Gewebes verhindern. Dies hat aber ein relativ hohes Gewicht des Sackes und höhere Kosten zur Folge.

Die vorliegende Erfindung zielt daher weiters darauf ab, ein Gewebe der eingangs genannten Art derart weiterzubilden, dass die Verschweißbarkeit ohne Erhöhung des Flächengewichts des Gewebes und ohne die Gefahr einer Desorientierung der Moleküle des Materials verbessert wird.

Zur Lösung dieser Aufgaben sieht die Erfindung bei einem Gewebe aus monoaxial verstreckten Polymer-, insbesondere Polyolefin- oder Polypropylenbändchen, das mit einer Beschichtung versehen ist, vor, dass die Beschichtung von einem Polymervlies, insbesondere Polyolefin- oder Polypropylenvlies gebildet ist. Unter einem Polymervlies ist hierbei ein textiles Flächengebilde aus einzelnen Polymerfasern zu verstehen. Insbesondere handelt es sich um einen Wirrfaser-Vliesstoff, bei dem die einzelnen Polymerfasern unorientiert gelegt sind, d.h. die Fasern liegen im Vliesstoff wirr zueinander. Insbesondere ist das Vlies als Spinnvlies ausgebildet. Das Vlies hat den Vorteil, dass es das Durchtreten von Staub weitestgehend verhindert ohne die Entlüftungsleistung wesentlich zu beeinflussen. Da das Gewebe samt Beschichtung eine Vielzahl von Perforationen aufweist, wirken die einzelnen Fasern des Vliesstoffs an der Oberfläche im Bereich der Perforationen wie ein Filter, der die Staubpartikel aufhält. Die im Zuge der Entlüftung mit dem Luftstrom mitgerissenen Staubpartikel verfangen sich somit im Vliesstoff und werden dadurch am Durchtreten durch das Vlies gehindert. Dadurch wird es möglich, die Perforationen größer auszubilden und bei gleicher Entlüftungsleistung in einer geringeren Anzahl vorzusehen, was den Herstellungsaufwand verringert. Eine bevorzugte Ausbildung sieht in diesem Zusammenhang vor, dass das Gewebe 10 - 60, insbesondere 20 - 50 Perforationen pro cm² aufweist. Der Durchmesser der Perforationen beträgt wenigstens 0,05 mm, bevorzugt wenigstens 0,1 mm.

Ein weiterer Vorteil des Vliesstoffes ist, dass dieser mehr als die herkömmliche Beschichtung zur Erhöhung der Festigkeit des Gewebes beiträgt, sodass das Gewebe bei gleichbleibender Gesamtfestigkeit mit einer geringeren flächenbezogenen Masse ausgeführt werden kann. Da der Vliesstoff zu geringeren Kosten erhältlich ist als das Gewebe, wird dadurch eine Kostenersparnis erreicht.

Ein weiterer Effekt ist, dass die unorientierten Fasern des Vlieses durch den Verbund mit dem Gewebe in ihrer Lage fixiert werden, was zu einer Erhöhung der Festigkeit des beschichteten Gewebes führt.

Auf Seiten des Vlieses kann das erfindungsgemäße Verbundmaterial sehr gut mit einem gleichartigen Material verschweißt werden ohne die Festigkeit des Materials merkbar zu reduzieren. Der Grund hierfür ist, dass die Fasermoleküle des Vlieses nur zu einem geringen Grad verstreckt sind, sodass die durch den Wärmeeintrag bewirkte Desorientierung der Moleküle keinen großen Einfluss auf die Festigkeit des Vlieses hat. Die Orientierung der verstreckten Bändchen des Gewebes bleibt jedenfalls unberührt.

Eine besonders vorteilhafte Ausbildung der Erfindung sieht vor, dass das Polymervlies, insbesondere Polypropylenvlies vollflächig auf dem Gewebe aufgebracht ist. Alternativ ist es aber auch möglich, dass das Polymervlies, insbesondere Polypropylenvlies nur partiell auf dem Gewebe aufgebracht ist, d.h. nur auf bestimmten Stellen, bei einem Schlauchgewebe z.B. nur auf einem Teil des Umfangs, insbesondere auf der Hälfte des Umfangs.

Bevorzugt ist weiters vorgesehen, dass das Polymervlies, insbesondere Polypropylenvlies unter Vermittlung einer Zwischenschicht auf das Gewebe aufgebracht ist. Dies gewährleistet einen sicheren und stabilen Verbund zwischen dem Gewebe und dem Vlies. Die Zwischenschicht kann dabei aus demselben Polymer bestehen wie das Gewebe und das Polymervlies. In besonders einfacher Weise wird so vorgegangen, dass die Zwischenschicht mittels Extrusionslaminieren aufgebracht ist.

Wenn das Gewebe entsprechend der Erfindung mit einem Vlies beschichtet ist, kann das Gewebe wie bereits erwähnt mit einer geringeren flächenbezogenen Masse ausgeführt werden, ohne dass dabei die Festigkeit des Verbundmaterials beeinträchtigt wird. Bevorzugt ist hierbei vorgesehen, dass das Gewebe eine flächenbezogene Masse von 40-60 gr/m², die Zwischenschicht eine flächenbezogene Masse von 10-20 gr/m² und das Polymervlies eine flächenbezogene Masse von 20-40 gr/m² aufweist. Gemäß einer besonders vorteilhaften Ausbildung weist das Gewebe eine flächenbezogene Masse von 50 gr/m², die Zwischenschicht eine flächenbezogene Masse von 15 gr/m² und das Polymervlies eine flächenbezogene Masse von 25-30 gr/m² auf.

Hinsichtlich des Verhältnisses der flächenbezogenen Massen der einzelnen Schichten zueinander, hat sich herausgestellt, dass eine Ausbildung bevorzugt ist, bei der das Gewebe eine flächenbezogene Masse aufweist, die dem 1,5 - 2,5-fachen der flächenbezogenen Masse des Polymervlieses entspricht.

Das erfindungsgemäße beschichtete Gewebe kann zur Herstellung von Säcken für den Transport von insbesondere pulverförmigem Füllgut verwendet werden. Es sind aber auch andere Verwendungen denkbar, z.B. zur Herstellung von Planen, Abdeckungen, etc.

Bei der Verwendung bei einem Sack ist das Polymervlies bevorzugt an der Außenseite des Sackes angeordnet. Insbesondere handelt es sich dabei um einen Sack mit Kastenform, wobei wenigstens ein Endbereich des Sackkörpers eine Bodenfaltung aufweist, sodass der Sack einen im Wesentlichen rechteckigen Boden aufweist. Insbesondere handelt es sich um einen Kastenventilsack, dessen Boden ein insbesondere aus dem Bodengewebematerial gebildetes Ventil aufweist, sodass der herstellerseitig bereits verschlossene Sack in herkömmlichen Abfüllanlagen über das Ventil befüllt werden kann.

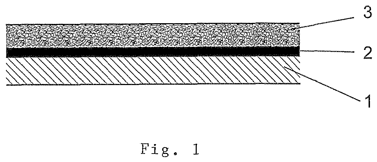

Die Erfindung wird nachfolgend anhand eines in der Zeichnung schematisch dargestellten Ausführungsbeispiels näher erläutert. In der Figur ist der Schichtaufbau des erfindungsgemäßen beschichteten Gewebes dargestellt. Der Aufbau umfasst ein Gewebe 1 aus monoaxial verstreckten Polypropylenbändchen, wobei die flächenbezogene Masse des Gewebes 50 gr/m² aufweist. Die Zwischenschicht 2 besteht aus Polypropylen und kann mittels Extrusionslaminieren auf das Gewebe aufgebracht werden. Das Beschichten der Gewebebahn erfolgt bevorzugt wie in der WO 2011/094783 A1 beschrieben. Die flächenbezogene Masse der Zwischenschicht beträgt 15 gr/m². Im noch nicht verfestigten Zustand der Zwischenschicht wird auf diese das Polypropylenvlies 3 aufgebracht und stoffschlüssig mit der Zwischenschicht verbunden. Das Polypropylenvlies weist eine flächenbezogene Masse von ca. 25 gr/m² auf. Es ist ersichtlich, dass alle drei Schichten aus Polypropylen bestehen, sodass ein sortenreines Verbundmaterial geschaffen wird, das sich nach Gebrauch unproblematisch einer stofflichen Verwertung zuführen lässt.

Insbesondere ist das Vlies als Spinnvlies ausgebildet. Zur Faserherstellung wird ein Polymer in einem Extruder erhitzt und auf einen hohen Druck gebracht. Das Polymer wird in genauer Dosierung mittels der Spinnpumpen durch eine Matrize, die so genannte Spinndüse gepresst. Das Polymer tritt noch in geschmolzener Form als feiner Faden (Filament) aus der Düsenplatte aus. Durch einen Luftstrom wird es abgekühlt und noch aus der Schmelze gestreckt. Der Luftstrom befördert die Filamente auf ein Förderband das als Sieb ausgebildet ist. Durch eine Absaugung unter dem Siebband werden die Fäden fixiert. Dieses Fasergelege ist ein Wirrlagen-Vlies, das verfestigt werden muss. Die Verfestigung kann durch zwei beheizte Walzen (Kalander) oder durch einen Dampfstrom erfolgen. Bei der Verfestigung durch einen Kalander ist meist eine der beiden Walzen mit einer Gravur versehen, die aus Punkten, kurzen Rechtecken oder diamantähnlichen Punkten besteht. An den Kontaktpunkten verschmelzen die Filamente und bilden so den Vliesstoff.

Zur Herstellung eines Sackes aus dem beschichteten Gewebe wird wie folgt vorgegangen. In einem ersten Schritt wird entweder eine einseitig mit dem Vlies beschichtete Gewebebahn (Flachgewebe) genommen und zu einem Schlauch geformt, wobei das Vlies an der Außenseite zu liegen kommt. Oder es wird ein schlauchförmiges unbeschichtetes Gewebe (Rundgewebe) oder ein zu einem Schlauch geformtes unbeschichtetes Flachgewebe genommen und die Zwischenschicht durch Extrusionslaminieren in einer herkömmlichen Beschichtungsanlage (vgl. WO 2011/094783 A1) auf den Schlauch auflaminiert und das Vlies aufgebracht. In einem zweiten Schritt wird das schlauchförmige, beschichtete Gewebe perforiert. In einem dritten Schritt wird der schlauchförmige Sackkörper zumindest auf einer Seite verschlossen. Insbesondere wird der Sackkörper zur Herstellung eines Kastenventilsackes an beiden Enden mit einer Bodenfaltung versehen und auf die Bodenfaltung ein Deckblatt geschweißt. In eine der beiden Bodenfaltungen wird ein insbesondere aus dem Gewebe bestehendes Ventil integriert.

## Patentansprüche

1. Gewebe für die Herstellung von Säcken bestehend aus Polymer-, insbesondere Polyolefin-, Polypropylen-, Polyethylen- (HDPE) oder Polyethylenterephthalatbändchen, die monoaxial verstreckt sind, wobei das Gewebe mit einer Beschichtung versehen ist, **dadurch gekennzeichnet, dass** die Beschichtung (2) von einem Polymervlies, insbesondere Polyolefin- oder Polypropylenvlies (3) gebildet ist, und dass das Gewebe (1) samt Beschichtung eine Vielzahl von Perforationen aufweist.

2. Gewebe nach Anspruch 1, **dadurch gekennzeichnet, dass** das Polymervlies, insbesondere Polypropylenvlies (3) auf dem Gewebe vollflächig aufgebracht ist.

3. Gewebe nach Anspruch 1 oder 2, **dadurch gekennzeichnet, dass** das Polymervlies, insbesondere Polypropylenvlies (3) unter Vermittlung einer Zwischenschicht (2) auf das Gewebe aufgebracht ist.

4. Gewebe nach Anspruch 3, **dadurch gekennzeichnet, dass** die Zwischenschicht (2) aus demselben Polymer besteht wie das Gewebe und das Polymervlies (3).

5. Gewebe nach Anspruch 3 oder 4, **dadurch gekennzeichnet, dass** die Zwischenschicht (2) mittels Extrusionslaminieren aufgebracht ist.

6. Gewebe nach einem der Ansprüche 1 bis 5, **dadurch gekennzeichnet, dass** das Gewebe (1) 10 - 60, insbesondere 2C - 5C Perforationen pro cm² aufweist.

7. Gewebe nach einem der Ansprüche 1 bis 5, **dadurch gekennzeichnet, dass** der Durchmesser der Perforationen wenigstens 0,05 mm, bevorzugt wenigstens 0,1 mm beträgt.

8. Gewebe nach einem der Ansprüche 3 bis 7, **dadurch gekennzeichnet, dass** das Gewebe (1) eine flächenbezogene Masse von 40-60 gr/m², die Zwischenschicht (2) eine flächenbezogene Masse von 10-20 gr/m² und das Polymervlies, (3) eine flächenbezogene Masse von 20-40 gr/m² aufweist.

9. Gewebe nach Anspruch 8, **dadurch gekennzeichnet, dass** das Gewebe (1) eine flächenbezogene Masse von 50 gr/m², die Zwischenschicht (2) eine flächenbezogene Masse von 15 gr/m² und das Polymervlies (3) eine flächenbezogene Masse von 25-30 gr/m² aufweist.

10. Gewebe nach einem der Ansprüche 1 bis 9, **dadurch gekennzeichnet, dass** das Gewebe (1) eine flächenbezogene Masse aufweist, die dem 1,5 - 2,5-fachen der flächenbezogenen Masse des Polymervlies (3) beträgt.

11. Sack umfassend oder bestehend aus einem beschichteten Gewebe (1) nach einem der Ansprüche 1 bis 10, **dadurch gekennzeichnet, dass** das Polymervlies, (3) an der Außenseite des Sackes angeordnet ist.

12. Sack nach Anspruch 11, **dadurch gekennzeichnet, dass** wenigstens ein Endbereich des Sackkörpers eine Bodenfaltung aufweist, sodass der Sack einen im Wesentlichen rechteckigen Boden aufweist.

13. Sack nach Anspruch 11 oder 12, **dadurch gekennzeichnet, dass** der Sack als Kastenventilsack ausgebildet ist, dessen Boden ein insbesondere aus dem Bodengewebematerial gebildetes Ventil aufweist.

## Claims

1. A woven fabric for the production of bags, comprised of tapes of polymer, in particular polyolefin, polypropylene, polyethylene (HDPE) or polyethylene terephthalate, said tapes being monoaxially stretched, wherein the fabric is provided with a coating, **characterized in that** the coating (2) is formed of a polymer non-woven, in particular polyolefin or polypropylene non-woven (3), and that the fabric (1) plus coating comprises a plurality of perforations.

2. A woven fabric according to claim 1, **characterized in that** the polymer non-woven, in particular polypropylene non-woven (3), is applied all over the fabric.

3. A woven fabric according to claim 1 or 2, **characterized in that** the polymer non-woven, in particular polypropylene non-woven (3), is applied on the fabric via an intermediate layer (2).

4. A woven fabric according to claim 3, **characterized in that** the intermediate layer (2) is comprised of the same polymer as the fabric and the polymer non-woven (3).

5. A woven fabric according to claim 3 or 4, **characterized in that** the intermediate layer (2) is applied by extrusion lamination.

6. A woven fabric according to any one of claims 1 to 5, **characterized in that** the fabric (1) comprises 10-60, in particular 20-50, perforations per cm².

7. A woven fabric according to any one of claims 1 to 6, **characterized in that** the diameter of the perforations is at least 0.05 mm, preferably at least 0.1 mm.

8. A woven fabric according to any one of claims 3 to 7, **characterized in that** the fabric (1) has a mass per unit area of 40-60 g/m², the intermediate layer (2) has a mass per unit area of 10-20 g/m², and the polymer non-woven (3) has a mass per unit area of 20-40 g/m².

9. A woven fabric according to claim 8, **characterized in that** the fabric (1) has a mass per unit area of 50 g/m², the intermediate layer (2) has a mass per unit area of 15 g/m², and the polymer non-woven (3) has a mass per unit area of 25-30 g/m².

10. A woven fabric according to any one of claims 1 to 9, **characterized in that** the fabric (1) has a mass per unit area corresponding to 1.5-2.5 times the mass per unit area of the polymer non-woven (3).

11. A bag comprising, or comprised of, a coated woven fabric (1) according to any one of claims 1 to 10, **characterized in that** the polymer non-woven (3) is disposed on the outer side of the bag.

12. A bag according to claim 11, **characterized in that** at least one end region of the bag body comprises a bottom fold such that the bag has a substantially rectangular bottom.

13. A bag according to claim 11 or 12, **characterized in that** the bag is designed as a block bottom valve bag, whose bottom comprises a valve made, in particular, of the bottom fabric material.

## Revendications

1. Etoffe tissée pour la fabrication de sacs constitués de bandelettes de polymère, en particulier de bandelettes de polyoléfine, de polypropylène, de polyéthylène (HDPE) ou de polyéthylène téréphtalate, qui sont étirées monoaxialement, dans laquelle l'étoffe tissée est munie d'un revêtement, **caractérisée en ce que** le revêtement (2) est formé d'un non-tissé polymère, en particulier un non-tissé de polyoléfine ou de polypropylène (3), et **en ce que** l'étoffe tissée (1), revêtement inclus, comporte une pluralité de perforations.

2. Etoffe tissée selon la revendication 1, **caractérisée en ce que** le non-tissé polymère, en particulier le non-tissé en polypropylène (3), est appliqué sur toute la surface de l'étoffe tissée.

3. Etoffe tissée selon la revendication 1 ou 2, **caractérisée en ce que** le non-tissé polymère, en particulier le non-tissé en polypropylène (3), est appliqué sur l'étoffe tissée par l'intermédiaire d'une couche intermédiaire (2).

4. Etoffe tissée selon la revendication 3, **caractérisée en ce que** la couche intermédiaire (2) est constituée du même polymère que l'étoffe tissée et le non-tissé polymère (3).

5. Etoffe tissée selon la revendication 3 ou 4, **caractérisée en ce que** la couche intermédiaire (2) est appliquée par extrusion-laminage.

6. Etoffe tissée selon l'une des revendications 1 à 5, **caractérisée en ce que** l'étoffe tissée (1) comporte de 10 à 60, en particulier de 20 à 50, perforations par cm².

7. Etoffe tissée selon l'une des revendications 1 à 6, **caractérisée en ce que** le diamètre des perforations est au moins de 0,05 mm, de préférence au moins de 0,1 mm.

8. Etoffe tissée selon l'une des revendications 3 à 7, **caractérisée en ce que** l'étoffe tissée (1) a une masse surfacique de 40 à 60 g/m², la couche intermédiaire (2) a une masse surfacique de 10 à 20 g/m² et le non-tissé polymère (3) a une masse surfacique de 20 à 40 g/m².

9. Etoffe tissée selon la revendication 8, **caractérisée en ce que** l'étoffe tissée (1) a une masse surfacique de 50 g/m², la couche intermédiaire (2) a une masse surfacique de 15 g/m² et le non-tissé polymère (3) a une masse surfacique de 25 à 30 g/m².

10. Etoffe tissée selon l'une des revendications 1 à 9, **caractérisée en ce que** l'étoffe tissée (1) a une masse surfacique qui est égale à 1,5 à 2,5 fois la masse surfacique du non-tissé polymère (3).

11. Sac comportant ou constitué d'une étoffe tissée revêtue (1) selon l'une des revendications 1 à 10, **caractérisé en ce que** le non-tissé polymère (3) est agencé sur le côté extérieur du sac.

12. Sac selon la revendication 11, **caractérisé en ce qu'**au moins une zone d'extrémité du corps de sac comporte un pli de fond, de telle sorte que le sac comporte un fond sensiblement rectangulaire.

13. Sac selon la revendication 11 ou 12, **caractérisé en ce que** le sac est formé comme un sac à valve à fond plat dont le fond comporte une valve en particulier formée à partir du matériau d'étoffe tissée de fond.
